# FASCICULE DE BREVET EUROPEEN

(11) **EP 0 610 879 B1**
(45) Date de publication et mention de la délivrance du brevet: **14.08.1996**
(21) Numéro de dépôt: 94101883.0
(22) Date de dépôt: 08.02.1994
(51) Int. Cl.: G05B 19/042, G04C 15/00

(54) **Dispositif de gestion de commandes horaires pour le pilotage à distance d'appareils électriques**
Vorrichtung zur Verwaltung der Stundenbefehle für die Fernsteuerung elektrischer Geräten
Device to control time commands for the remote control of electrical apparatus

(30) Priorité: 12.02.1993 FR 9301626
(43) Date de publication de la demande: 17.08.1994
(73) Titulaire: MOULINEX, F-93171 Bagnolet (FR)
(72) Inventeur: Letorey, Joseph Arthur Philippe Marie, F-14390 Varaville (FR); Parise, Vital André, F-14400 Arganchy (FR)
(74) Mandataire: May, Hans Ulrich, Dr.

(56) Documents cités:
- EP-A- 0 369 430
- EP-A- 0 424 772
- FR-A- 2 462 740
- US-A- 5 160 853

## Description

L'invention se rapporte à un dispositif de gestion de commandes horaires pour le pilotage à distance d'appareils électriques et comprenant une horloge destinée à marquer le temps, un moyen de réglage de l'horloge, un moyen de programmation permettant de choisir une heure absolue de réveil, un moyen de comparaison entre le temps horloge et l'heure absolue de réveil, et un moyen de commande qui peut prendre soit un état actif pour lequel il envoie une information de mise en fonctionnement des appareils et en lequel il est amené par la concordance du temps horloge avec l'heure absolue de réveil, soit un état inactif pour lequel il n'autorise pas le fonctionnement des appareils en l'absence de concordance, ledit moyen de commande étant subordonné à un moyen de correction de l'heure absolue de réveil qui retranche ou ajoute un temps déterminé par rapport à ladite heure absolue choisie de manière à fixer une heure relative, ledit moyen de commande passant alors en son état actif à cette heure relative.

Les dispositifs de ce genre permettent ainsi de piloter le fonctionnement à distance d'appareils selon une séquence prédéterminée par l'utilisateur et ceci par rapport à une heure absolue choisie par cet utilisateur. Ainsi, à titre d'exemple, on peut concevoir une programmation de déclenchement d'une cafetière électrique à 7h00 et le réveil à 7h10 mn, suivi d'un préchauffage de la salle de bains à 7h20 mn.

Malheureusement, il s'avère que si l'utilisateur souhaite changer son heure absolue de réveil, il doit également changer la programmation de la cafetière et du préchauffage. On comprendra que ces multiples programmations deviennent à la longue fastidieuses et rendent le dispositif de gestion incommode, pouvant entraîner des erreurs dans la commande des appareils.

On connaît, d'après le document US-A-5 160 853, un dispositif de commande programmable adapté à piloter par commutation un système d'éclairage situé dans un local et qui comprend des moyens de correction de l'heure effective de commutation qui ajoutent un temps déterminé à l'heure de commutation programmée pour commander le système d'éclairage à cette heure de commutation corrigée. Toutefois, un tel dispositif n'est pas conçu pour piloter le fonctionnement d'appareils à des heures relatives établies chacune par rapport à l'heure absolue de réveil choisie par l'utilisateur et susceptible d'être modifiée par ce dernier.

Par ailleurs, il est connu d'après le document EP-A-424 772 d'utiliser les courants porteurs pour la transmission d'informations dans un réseau domotique.

L'invention a donc pour but de remédier à ces inconvénients en automatisant le dispositif de gestion de commandes horaires.

Selon l'invention, le dispositif est caractérisé en ce que le moyen de programmation comporte des moyens automatiques de positionnement de l'heure relative par rapport à l'heure absolue programmée de réveil.

Grâce à ces moyens de positionnement, on comprendra que si l'utilisateur change la programmation de son heure absolue de réveil, l'heure relative sera reportée automatiquement par rapport à la nouvelle heure absolue choisie et ceci sans erreur possible pour la commande des appareils.

Selon un autre aspect de l'invention, le dispositif de gestion de commandes horaires met en oeuvre un procédé dans lequel on effectue les opérations suivantes :
- programmation d'une heure absolue de réveil ;
- programmation d'une heure relative par rapport à l'heure absolue ;
- positionnement automatique de l'heure relative sur l'heure absolue programmée de réveil ;
- comparaison du temps horloge à l'heure relative ;
- et commande du fonctionnement des appareils.

Ainsi, avec un tel procédé, on obtient une programmation simple et fiable.

Les caractéristiques, détails et avantages de l'invention ressortiront d'ailleurs de la description qui va suivre, à titre d'exemple, en référence au dessin annexé dans lequel :

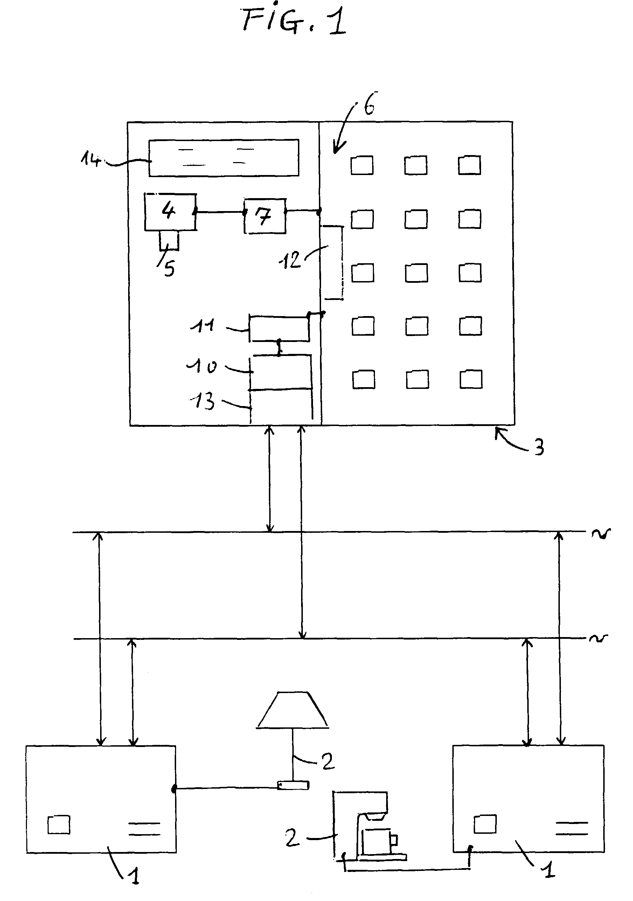

La figure 1 est un schéma simplifié illustrant les différents moyens composant le dispositif de gestion de commandes horaires selon l'invention et appliqué à une installation de domotique.

Le dispositif de gestion de commandes horaires pour la commande d'appareils est, par exemple, appliqué à une installation de domotique dans laquelle on utilise les courants porteurs pour la transmission d'informations entre des émetteurs-récepteurs dits esclaves 1 destinés à commander des appareils électriques 2 et au moins une régie-maître 3 comprenant le dispositif qui comporte à cet effet une horloge 4 destinée à marquer le temps, un moyen de réglage 5 de l'horloge, un moyen de programmation 6 permettant de choisir une heure absolue de réveil, un moyen de comparaison 7 entre le temps horloge et l'heure absolue, et un moyen de commande 10 qui peut prendre soit un état actif pour lequel il envoie une information de mise en fonctionnement des appareils 2 et en lequel il est amené par la concordance du temps horloge à l'heure absolue, soit un état inactif pour lequel il n'autorise pas le fonctionnement des appareils 2 en l'absence de concordance.

Selon l'invention, le moyen de commande 10 est subordonné à un moyen de correction 11 de l'heure absolue qui retranche ou ajoute un temps déterminé par rapport à ladite heure absolue choisie de manière à fixer une heure relative, ledit moyen de commande 10 passant alors en son état actif à cette heure relative, et en ce que le moyen de programmation 6 comporte des moyens automatiques de positionnement 12 de l'heure relative par rapport à l'heure absolue programmée.

Selon une version préférée de l'invention, le moyen de programmation 6 comporte un premier microcontrôleur renfermant une mémoire RAM de stockage de l'heure absolue de réveil et de l'heure relative et une mémoire permanente du type par exemple EEPROM et comprenant le moyen de correction 11, le moyen de comparaison 7, le moyen de commande 10 équipé d'une interface 13 de communication avec l'appareil, et un second microcontrôleur comportant l'horloge 4 et le moyen de réglage 5.

Pour permettre la transmission d'informations entre les deux microcontrôleurs, on utilise un bus du type I2C. Les microcontrôleurs adaptés à ces traitements de données, d'informations et de commande sont, par exemple, de la famille 8051 de chez PHILIPS, référence 652.

A titre d'exemple, on va décrire ci-après la mise en oeuvre du dispositif de gestion à travers le procédé selon l'invention.

Selon une première hypothèse, l'utilisateur désire utiliser le dispositif pour programmer à l'aide d'un clavier 14, par exemple, le fonctionnement d'une cafetière électrique 2 cinq minutes avant l'heure absolue de réveil, et le fonctionnement d'un radiateur de salle de bains vingt minutes après ladite heure de réveil.

Pour cela, on effectue les opérations suivantes :
- programmation d'une heure absolue de réveil ;
- programmation par le moyen de correction 11 d'une heure relative par rapport à l'heure absolue, c'est-à-dire moins cinq minutes et plus vingt minutes ;
- positionnement automatique de l'heure relative choisie sur l'heure absolue de réveil ;
- comparaison du temps horloge à l'heure relative choisie ;
- et commande du fonctionnement des appareils par rapport à ladite heure relative, c'est-à-dire déclenchement de la cafetière 2 cinq minutes avant l'heure de réveil et déclenchement du radiateur vingt minutes après l'heure de réveil.

Selon une deuxième hypothèse, l'utilisateur désire, ayant gardé la première hypothèse, modifier l'heure absolue de réveil en fonction des jours de la semaine. Pour cela, il programme jour par jour par le moyen de programmation 6 une nouvelle heure absolue de réveil. Grâce aux moyens automatiques de positionnement, l'heure relative (c'est-à-dire dans le cas présent l'heure absolue moins cinq minutes et plus vingt minutes) s'adapte à chaque nouvelle heure absolue de réveil de façon précise et peut ainsi déclencher la commande du fonctionnement des appareils selon la programmation définie.

L'invention s'applique par exemple à des réseaux domotiques tels que décrits dans le brevet français N° 91 00479 (FR-A-26 71884 on EP-A- 0 495 397) de la Demanderesse.

## Revendications

1. Dispositif de gestion de commandes horaires pour le pilotage à distance d'appareils et comprenant une horloge (4) destinée à marquer le temps, un moyen de réglage (5) de l'horloge, un moyen de programmation (6) permettant de choisir une heure absolue de réveil, un moyen de comparaison (7) entre le temps horloge et l'heure absolue de réveil, et un moyen de commande (10) qui peut prendre soit un état actif pour lequel il envoie une information de mise en fonctionnement des appareils et en lequel il est amené par la concordance du temps horloge avec l'heure absolue de réveil, soit un état inactif pour lequel il n'autorise pas le fonctionnement des appareils en l'absence de concordance, ledit moyen de commande (10) étant subordonné à un moyen de correction (11) de l'heure absolue de réveil qui retranche ou ajoute un temps déterminé par rapport à ladite heure absolue choisie de manière à fixer une heure relative, ledit moyen de commande (10) passant alors en son état actif à cette heure relative,
**caractérisé en ce que** le moyen de programmation (6) comporte des moyens automatiques de positionnement (12) de l'heure relative par rapport à l'heure absolue programmée de réveil.

2. Dispositif selon la revendication 1,
**caractérisé en ce que** le moyen de programmation (6) comporte un premier microcontrôleur renfermant une mémoire RAM de stockage de l'heure absolue de réveil et de l'heure relative et une mémoire permanente comprenant le moyen de correction (11), les moyens automatiques de positionnement (12), le moyen de comparaison (7), et le moyen de commande (10) équipée d'une interface (13) de communication avec l'appareil, ainsi qu'un second microcontrôleur comportant l'horloge (4) et le moyen de réglage (5).

3. Dispositif selon la revendication 2,
**caractérisé en ce que** la liaison entre les deux microcontrôleurs est effectuée au moyen d'un bus du type I2C.

4. Procédé de gestion de commandes horaires pour la commande à distance d'appareils mettant en oeuvre le dispositif selon les revendications 1 à 3 et dans lequel on utilise une horloge (4) destinée à marquer le temps, un moyen de réglage (5) de l'horloge, un moyen de programmation (6) permettant de choisir une heure absolue de réveil, un moyen de comparaison (7) entre le temps horloge et l'heure absolue de réveil, et un moyen de commande (10) desdits appareils en fonction du résultat du moyen de comparaison, ledit procédé comportant les opérations suivantes :
a) programmation d'une heure absolue de réveil ;
b) programmation par un moyen de correction (11) d'une heure relative par rapport à l'heure absolue de réveil ;
c) comparaison du temps horloge à l'heure relative ;
d) commande du fonctionnement des appareils par rapport à ladite heure relative ;
**caractérisé en ce que** l'opération c) est précédée d'une opération consistant en un positionnement automatique de l'heure relative sur l'heure absolue programmée de réveil.

5. Procédé de gestion selon la revendication 4, **caractérisé en ce qu**'il est appliqué à une installation de domotique dans laquelle on utilise les courants porteurs pour la transmission d'informations entre des émetteurs-récepteurs (1) dits esclaves destinés à commander des appareils électriques (2) et au moins une régie-maître (3) comportant l'horloge (4), le moyen de réglage (5), le moyen de programmation (6), le moyen de comparaison (7), le moyen de commande (10), le moyen de correction (11) et les moyens automatiques de positionnement (12) de l'heure relative par rapport à l'heure absolue.

## Patentansprüche

1. Vorrichtung zur Verwaltung von Stundenbefehlen zur Fernsteuerung elektrischer Geräte, die eine Uhr (4) zur Markierung der Zeit, eine Einrichtung (5) zum Regeln der Uhr, eine Programmiereinrichtung (6), die die Wahl einer absoluten Weckzeit ermöglicht, eine Einrichtung (7) zum Vergleich der Uhrzeit und der absoluten Weckzeit sowie eine Steuereinrichtung (10) aufweist, die entweder einen aktiven Zustand einnehmen kann, in dem sie eine Information zum Einschalten der Geräte schickt und in den sie durch die Übereinstimmung der Uhrzeit mit der absoluten Weckzeit gebracht ist, oder einen inaktiven Zustand einnehmen kann, in dem sie den Betrieb der Geräte nicht zuläßt, wenn keine Übereinstimmung besteht, wobei die Steuereinrichtung (10) einer Einrichtung (11) zur Korrektur der absoluten Weckzeit untergeordnet ist, die eine bestimmte Zeit bezüglich der absoluten Uhrzeit hinzufügt oder davon abzieht, um eine relative Uhrzeit festzulegen, wobei die Steuereinrichtung (10) dann zu dieser relativen Uhrzeit in ihren aktiven Zustand übergeht, **dadurch gekennzeichnet, daß** die Programmiereinrichtung (6) automatische Einrichtungen (12) zur Einstellung der relativen Uhrzeit bezüglich der programmierten absoluten Weckzeit aufweist.

2. Vorrichtung nach Anspruch 1, **dadurch gekennzeichnet**, daß die Programmiereinrichtung (6) einen ersten Mikrosteuerbaustein, der einen RAM-Speicher zum Speichern der absoluten Weckzeit und der relativen Uhrzeit sowie einen Permanentspeicher umfaßt, sowie die Korrektureinrichtung (11), die automatischen Einstelleinrichtungen (12), die Vergleichseinrichtung (7), die Steuereinrichtung (10), die mit einer Schnittstelle (13) zur Kommunikation mit dem Gerät ausgestattet ist, und einen zweiten Mikrosteuerbaustein aufweist, der die Uhr (4) und die Regeleinrichtung (5) aufweist.

3. Vorrichtung nach Anspruch 2, **dadurch gekennzeichnet**, daß die Verbindung zwischen den beiden Mikrosteuerbausteinen durch einen Bus vom Typ I2C hergestellt wird.

4. Verfahren zur Verwaltung von Stundenbefehlen zur Fernsteuerung von Geräten, das die Vorrichtung nach den Ansprüchen 1 bis 3 verwendet und bei dem eine Uhr (4) zur Markierung der Zeit, eine Regeleinrichtung (5) für die Uhr, eine Programmiereinrichtung (6), die die Wahl einer absoluten Weckzeit ermöglicht, eine Einrichtung (7) zum Vergleich der Uhrzeit und der absoluten Weckzeit sowie eine Steuereinrichtung (10) für die Geräte in Abhängigkeit von dem Ergebnis der Vergleichseinrichtung verwendet werden, wobei das Verfahren die folgenden Operationen umfaßt:
a) Programmierung einer absoluten Weckzeit;
b) Programmierung einer relativen Uhrzeit bezüglich der absoluten Uhrzeit durch eine Korrektureinrichtung (11);
c) Vergleich der Uhrzeit mit der relativen Uhrzeit;
d) Steuerung des Betriebs der Geräte bezüglich der relativen Zeit, **dadurch gekennzeichnet**, daß der Operation c) eine Operation vorausgeht, die in der automatischen Einstellung der relativen Uhrzeit nach der programmierten absoluten Weckzeit besteht.

5. Verwaltungsverfahren nach Anspruch 4, **dadurch gekennzeichnet**, daß es auf eine Hauselektronikanlage angewendet wird, bei der Trägerströme zur Informationsübertragung zwischen Sende-Empfängern (1), den sogenannten Slaves, die zur Steuerung der elektrischen Geräte (2) bestimmt sind, und wenigstens einer Master-Steuerung (3) verwendet werden, die die Uhr (4), die Regeleinrichtung (5), die Programmiereinrichtung (6), die Vergleichseinrichtung (7), die Steuereinrichtung (10), die Korrektureinrichtung (11) sowie die automatischen Einrichtungen (12) zur Einstellung der relativen Uhrzeit bezüglich der absoluten Uhrzeit aufweist.

## Claims

1. Device for managing timing controls for the remote control of electrical appliances and comprising a clock (4) designed to indicate the time, a means (5) of adjusting the clock, a programming means (6) enabling an absolute alarm time to be chosen, a means (7) of comparing the clock time and the absolute alarm time, and a control means (10) which can adopt either an active state in which it sends data for starting up the appliances and into which it is brought as a result of agreement between the clock time and the absolute alarm time, or an inactive state in which it does not enable the functioning of the appliances in the absence of agreement, the said control means (10) being under the control of a means (11) of correcting the absolute alarm time which deducts or adds a given time with respect to the said absolute time chosen so as to fix a relative time, the said control (10) means then going to its active state at this relative time,
characterised in that the programming means (6) includes automatic means (12) for positioning the relative time with respect to the programmed absolute alarm time.

2. Device according to Claim 1,
characterised in that the programming means (6) includes a first microcontroller including a random access memory for storing the absolute alarm time and the relative time and a permanent memory comprising the correction means (11), the automatic positioning means (12), the comparison means (7), and the control means (10) equipped with an interface (13) for communicating with the appliance, as well as a second microcontroller including the clock (4) and the adjustment means (5).

3. Device according to Claim 2,
characterised in that the connection between the two microcontrollers is effected by means of a bus of the I2C type.

4. Method for managing timing controls for the remote control of appliances using the device according to Claims 1 to 3 and in which use is made of a clock (4) designed to indicate the time, a means (5) for adjusting the clock, a programming means (6) enabling an absolute alarm time to be chosen, a means (7) for comparing the clock time and the absolute time, and a means (10) of controlling the said appliances according to the result from the comparison means, the said method including the following operations:
a) programming of an absolute alarm time;
b) programming, using a connection means (11), of a relative time with respect to the absolute alarm time;
c) comparison of the clock time and the relative time;
d) control of the functioning of the appliances with respect to the said relative time;
characterised in that the operation c) is preceded by an operation consisting of automatic positioning of the relative time with respect to the programmed absolute alarm time.

5. Management method according to Claim 4,
characterised in that it is applied to a home automation installation in which carrier currents are used for the transmission of data between so-called slave transceivers (1) designed to control electrical appliances (2) and at least one master controller (3) including the clock (4), the adjustment means (5), the programming means (6), the comparison means (7), the control means (10), the correction means (11) and the automatic means (12) of positioning the relative time with respect to the absolute time.
